# EUROPÄISCHE PATENTSCHRIFT

(11) **EP 0 448 928 B1**
(45) Veröffentlichungstag und Bekanntmachung des Hinweises auf die Patenterteilung: **23.03.1994**
(21) Anmeldenummer: 91100496.8
(22) Anmeldetag: 17.01.1991
(51) Int. Cl.: F24D 3/14, E04F 15/02, E04F 15/22

(54) **Bodenverlegeelement**
Floor laying element
Elément de pose au sol

(30) Priorität: 28.02.1990 DE 9002358 U
(43) Veröffentlichungstag der Anmeldung: 02.10.1991
(73) Patentinhaber: REHAU AG + Co, 95111 Rehau (DE)
(72) Erfinder:

(56) Entgegenhaltungen:
- AT-A- 362 913
- DE-U- 8 025 288

## Beschreibung

Die Erfindung betrifft ein Bodenverlegeelement für Dämmzwecke und für die Halterung von Fußbodenheizungsrohren, bestehend aus einer Schaumstoffplatte mit von der Plattenoberfläche in einem vorgegebenen Muster vorstehenden Haltenoppen, wobei Aufnahmeaussparungen vorgesehen sind.

Derartige Bodenverlegeelemente sind in ihrem genannten grundsätzlichen Aufbau bekannt (DE-C 26 44 711). Die bekannten Platten haben zylinderförmige Noppen, die sich praktisch über die gesamte Plattenoberfläche erstrecken und haben ferner eine dicht aufliegende Formplatte aus Kunststoffolie, die auf ihrer einen Seite Becher trägt, wobei die Becher und die Noppen aufeinandergestülpt sind. Die bekannten Bodenverlegeelemente haben einen relativ komplizierten Aufbau und sie eignen sich insbesondere nicht für den Einsatz im Zusammenhang mit Schwingböden der üblichen Bauart, da sie deren räumlichen und montagemäßigen Anforderungen und Besonderheiten nicht gerecht werden.

Ihrem üblichen Aufbau nach beinhalten derartige Schwingböden in vorgegebenen Abständen angeordnete Lagerklötze bzw. Elasticpads, auf denen in einer Längserstreckung Holzleisten als untere Schwingträger liegen, auf denen wiederum quer dazu obere Schwingträger in Form von Holzleisten liegen. Weitere Elasticpads können mit eingebaut sein. Es kann eine als Blindboden bezeichnete Zwischenlage folgen, über der dann die Lastverteilungsplatte liegt, die ihrerseits den Oberbelag trägt. Als Dämmung nach unten werden, meist auf einer Bitumenlage als Feuchtigkeitssperre, normale Schaumstoffplatten verlegt. Da die unteren Lagerklötze bzw. Elasticpads des Schwingbodens nicht auf der Schaumstoffplatte aufgelagert werden dürfen, müssen bei der Verlegung die zur Dämmung zunächst verlegten Schaumstoffplatten entsprechend dem Elasticpadraster von Hand ausgestanzt werden, um Aussparungen zu schaffen, in denen die Elasticpads auf der Rohdecke bzw. der Bitumenschicht abgestützt werden können.

Die Arbeit ist mühsam, zeit- und kostenaufwendig und beinhaltet zusätzlich die Gefahr von Beschädigungen der von der Bitumenschicht gebildeten Feuchtigkeitssperre. Bei diesen bislang bekannten Schwingbodensystemen müssen die Rohre von Fußbodenheizungen am Schwingboden selbst montiert und gehalten werden. Es gibt hier verschiedene bekannte Halterungssysteme entsprechend unterschiedlicher Fußbodenheizungssysteme. In jedem Fall müssen aber Rohrhalter, gegebenen falls auch Abstrahlbleche, Lamellen und dergleichen an Elementen des Schwingbodens befestigt werden. Da vielfach die Systeme dann nicht zueinander passen, insbesondere auch Rohrabbiegungen zu berücksichtigen sind, sind zahlreiche Nach- und Anpassungsarbeiten im Verlauf der Montage erforderlich. Insgesamt erfährt die Schwingbodenmontage durch den Einbau der Fußbodenheizungen eine erhebliche Unterbrechung. Da von einer Lebenserwartung von 10 bis 20 Jahren bei derartigen Schwingböden auszugehen ist, muß im Falle einer Sanierung des Schwingbodens auch die Fußbodenheizung in ihrer Konstruktion aufgelöst werden.

Aus der AT-A 362 913 ist ein Bodenverlegeelement bekannt, welches haltenoppenfreie Bereiche zwischen Haltenoppen unterschiedlicher Figuration aufweist, wobei die Haltenoppen in einem vorgegebenen Muster angeordnet sind. Die Haltenoppen mit dem größeren Querschnitt besitzen Aufnahmeaussparungen, welche in einen kürzeren und einen längeren Abschnitt unterteilt sind. Dies Aufnahmeaussparungen sind nach außen konisch verlaufend gestaltet und dienen bei der Verlegung des bekannten Bodenverlegeelements als Aufnahmeöffnung für einen Mörtel-Kleber.

Der Erfindung liegt die Aufgabe zu Grunde, ein Bodenverlegeelement der gattungsgemäßen Art zu schaffen, das sich besonders für die Montage von Fußbodenheizungen in Schwingböden eignet.

Die erfindungsgemäße Lösung besteht im wesentlichen darin, daß die Schaumstoffplatte Bereiche aufweist, die frei vom vorgegebenen Muster der Haltenoppen sind, und daß die Aufnahmeaussparungen in diesen Bereichen in einem vorbestimmten Raster in der Schaumstoffplatte vorgesehen sind.

Derartige Bodenverlegeelemente bilden einen Bausatz, der in äußerst vorteilhafter Weise einerseits die erforderliche Dämmung, andererseits die Haltemittel für die Heizungsrohre der Fußbodenheizung des Schwingbodens, ferner schon gleich fabrikatorisch vorgegeben die Aufnahmeaussparungen für die Lagerklötze bzw. Elasticpads des Schwingbodens enthält, und zwar nach der Verlegung der Elemente in einem vorgegebenen Raum in einem Rastermuster, das die erforderlichen Auflagerungspunkte der Schwingbodenelemente auf den Lagerklötzen bzw. Elasticpads passend vorgibt.

Nach Verlegen der Bitumenschicht als Feuchtigkeitssperre, für die nunmehr keinerlei nachträgliche Verletzungsgefahr besteht, werden die Bodenverlegeelemente gemäß der Erfindung verlegt. Es können dann lediglich mit Hilfe dieser Verlegeelemente die Heizungsrohre der Fußbodenheizung in der gewünschten Weise verlegt und an den Haltenoppen festgelegt werden. Es können dann die Lagerklötze bzw. Elasticpads des Schwingbodens eingesetzt werden und der Schwingboden selbst kann dann in einem Arbeitsgang ohne jegliche Unterbrechung fertig montiert werden. Wird eine Sanierung des Schwingbodens erforderlich, bleibt die Fußbodenheizungskonstruktion davon unberührt.

Weitere bevorzugte Ausgestaltungen der Bodenverlegeelemente gemäß der Erfindung ergeben sich aus den Unteransprüchen.

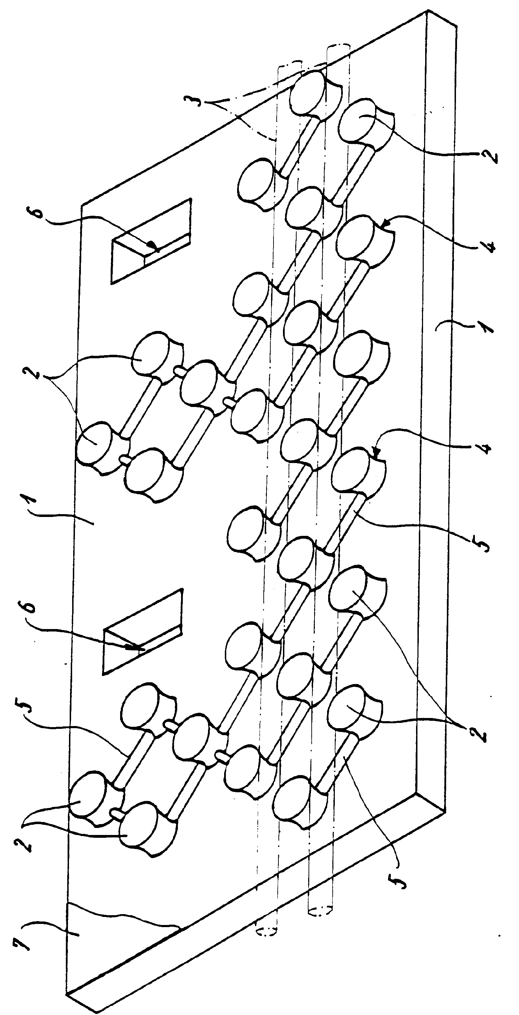

Ein bevorzugtes Ausführungsbeispiel eines derartigen Bodenverlegeelementes wird nachstehend unter Bezugnahme auf die Zeichnung näher beschrieben.

Die Zeichnung zeigt ein Bodenverlegeelement gemäß der Erfindung in perspektivischer Darstellung.

Das Bodenverlegeelement besteht seinem grundsätzlichen Aufbau nach aus einer Schaumstoffplatte 1, vorzugsweise rechteckigen Querschnittes. An die Oberseite der Schaumstoffplatte 1 sind, von der Plattenoberfläche vorstehend, in Teilbereichen Haltenoppen 2 in einem vorbestimmten Muster angeformt. Die einzelnen Haltenoppen 2 sind im wesentlichen zylindrisch, haben jedoch im Sinne ihrer Funktion der guten Halterung und Festlegung der in der Zeichnung angedeuteten Heizungsrohre 3 einer Fußbodenheizung für einen Schwingboden eine leicht konkav gewölbte Mantelfläche 4.

In einer bevorzugten Ausgestaltung erstrecken sich die Haltenoppen 2 längs einer Längsseite der Schaumstoffplatte im wesentlichen durchgehend bis etwa zur Plattenmitte und zwar im Sinne einer sicheren Halterung der Heizungsrohre 3 bei einfacher Rohrmontage in einer Anordnung, bei der die Haltenoppen 2 von Noppenlängsreihe zu Noppenlängsreihe jeweils versetzt zueinander liegen. Es hat sich dabei als wärmetechnisch sehr zweckmäßig erwiesen, die Heizungsrohre 3 ein klein wenig abständig von der Oberfläche der Schaumstoffplatte 1 zu halten. Hierzu sind in weiterer sehr zweckmäßiger Ausgestaltung Abstandsstege 5 an die betreffende Plattenoberfläche angeformt, die sich jeweils zwischen den einzelnen Haltenoppen 2 benachbarter Haltenoppenlängsreihen erstrecken und die im Hinblick auf den Versatz der Haltenoppen 2 von Reihe zu Reihe demzufolge den aus der Figur ersichtlichen Schrägverlauf haben.

In der anderen Hälfte der Schaumstoffplatte 1 sind in einem vorgegebenen Rasterabstand im dargestellten Ausführungsbeispiel zwei Aufnahmeaussparungen 6 vorgesehen, in die die Lagerklötze bzw. Elasticpads des Schwingbodens eingesetzt werden können. Die Bodenverlegeelemente in ihrer Bausatzgesamtheit ergeben nach Verlegung in einem vorgegebenen Raum damit das Auflagerungspunktmuster für die Schwingträger des Schwingbodens.

Die Anordnung ist dabei ferner zweckmäßig so getroffen, daß immer zwischen zwei Aufnahmeaussparungen 6, auch gesehen von Bodenverlegeelement zu Bodenverlegeelement, sich eine weitere Gruppe von Haltenoppen 2 ausgehend von der anderen Plattenhälfte hineinerstreckt. Dies ermöglicht es bei der Fußbodenheizungsmontage in einfacher Weise, abgewinkelte bzw. abgekrümmte Heizungsrohrabschnitte hier im Bereich zwischen zwei Schwingbodenauflagen störungsfrei hindurchzuführen.

Es besteht schließlich die Möglichkeit, die in Frage stehende Schaumstoffplattenoberfläche mit insbesondere wärmetechnisch interessanten, Wärme abstrahlenden Beschichtungen oder Kaschierungen zu versehen. Eine solche Beschichtung 7 ist in einem Eckbereich der Schaumstoffplatte 1 in der Zeichnung angedeutet.

## Patentansprüche

1. Bodenverlegeelement für Dämmzwecke und für die Halterung von Fußbodenheizungsrohren, bestehend aus einer Schaumstoffplatte mit von der Plattenoberfläche in einem vorgegebenen Muster vorstehenden Haltenoppen (2), wobei Aufnahmeaussparungen (6) vorgesehen sind, dadurch gekennzeichnet, daß die Schaumstoffplatte (1) Bereiche, die frei vom vorgegebenen Muster der Haltenoppen (2) sind, aufweist, und daß die Aufnahmeaussparungen (6) in diesen Bereichen in einem vorbestimmten Raster in der Schaumstoffplatte (1) vorgesehen sind.

2. Bodenverlegeelement nach Anspruch 1, dadurch gekennzeichnet, daß in einer Schaumstoffplatte (1) jeweils zwei Aufnahmeaussparungen (6) vorgesehen sind.

3. Bodenverlegeelement nach Anspruch 1 oder 2, dadurch gekennzeichnet, daß sich die Aufnahmeaussparungen (6) in der Nähe einer Längsseite einer rechteckig zugeschnittenen Schaumstoffplatte (1) befinden.

4. Bodenverlegeelement nach einem oder mehreren der vorhergehenden Ansprüche, gekennzeichnet durch ein Muster von Haltenoppen (2) derart, daß sich jeweils zwischen zwei Aufnahmeaussparungen (6), auch gesehen von Schaumstoffplatte zu Schaumstoffplatte, jeweils Haltenoppen (2) befinden.

5. Bodenverlegeelement nach Anspruch 3, dadurch gekennzeichnet, daß sich etwa in einer Hälfte der rechteckigen Schaumstoffplatte (1) längs ihrer Längsseite mehrere Reihen von Haltenoppen (2) durchgehend über die Schaumstoffplattenoberfläche erstrecken.

6. Bodenverlegeelement nach einem oder mehreren der vorhergehenden Ansprüche, dadurch gekennzeichnet, daß die Haltenoppen (2) von Reihe zu Reihe versetzt zueinander angeordnet sind.

7. Bodenverlegeelement nach einem oder mehreren der vorhergehenden Ansprüche, dadurch gekennzeichnet, daß sich zwischen benachbarten Haltenoppen (2) auf der Oberfläche der Schaumstoffplatte (1) Abstandsstege (5) erstrecken.

8. Bodenverlegeelement nach einem oder mehreren der vorhergehenden Ansprüche, dadurch gekennzeichnet, daß die in der Grundform zylindrischen Haltenoppen (2) eine leicht konkav gewölbte Mantelfläche (4) haben.

9. Bodenverlegeelement nach einem oder mehreren der vorhergehenden Ansprüche, dadurch gekennzeichnet, daß die die Haltenoppen (2) aufweisende Oberfläche der Schaumstoffplatte (1) mit einer Beschichtung (7) versehen ist.

## Claims

1. Floor laying element for insulation purposes and for mounting of underfloor heating pipes, consisting of a foam panel with supporting studs (2) protruding from the foam panel surface in a predefined pattern and with mounting recesses (6), characterized in that the foam panel (1) has areas which are free from the predefined pattern of supporting studs (2) and that the mounting recesses (6) are provided in these areas of the foam panel (1) in a predefined pattern.

2. Floor laying element in accordance with Claim 1, characterized in that two mounting recesses (6) are provided in each foam panel (1).

3. Floor laying element in accordance with Claim 1 or 2, characterized in that the mounting recesses (6) are located in the vicinity of a longitudinal side of a rectangularly cut foam panel (1).

4. Floor laying element in accordance with one or more of the above claims, characterized by a pattern of supporting studs (2) in such a way that the supporting studs (2) are always located between two mounting recesses (6) even when seen from foam panel to foam panel.

5. Floor laying element in accordance with Claim 3, characterized in that in roughly one half of the rectangular foam panel (1), several rows of supporting studs (2) extend continuously over the foam panel surface along its longitudinal side.

6. Floor laying element in accordance with one or more of the above claims, characterized in that the rows of supporting studs (2) are each offset from one another.

7. Floor laying element in accordance with one or more of the above claims, characterized in that spacer ribs (5) extend between adjacent supporting studs (2) across the surface of the foam panel.

8. Floor laying element in accordance with one or more of the above claims, characterized in that the basic cylindrical form of the supporting studs (2) has a slightly concave outer side surface (4).

9. Floor laying element in accordance with one or more of the above claims, characterized in that the surface of the foam panel (1) bearing the supporting studs (2) is finished with a coating (7).

## Revendications

1. Elément de sol destiné à l'isolation et à la fixation de tubes de chauffage par le sol, comprenant une plaque de mousse avec des boutons de fixation (2) dépassant de la surface de la plaque selon un modèle prédéfini et des évidements de réception (6), caractérisé par le fait que la plaque de mousse (1) présente des zones ne comportant pas de boutons (2) selon le modèle prédéfini et que des évidements de réception (6) sont prévus dans ces zones de la plaque de mousse (1) selon un quadrillage prédéfini.

2. Elément de sol selon la revendication 1, caractérisé par le fait que deux évidements de réception (6) sont prévus dans chaque plaque de mousse (1).

3. Elément de sol selon la revendication 1 ou 2, caractérisé par le fait que les évidements de réception (6) sont disposés à proximité d'un côté longitudinal d'une plaque découpée rectangulairement (1).

4. Elément de sol selon une ou plusieurs des revendications précédentes, caractérisé par le fait que le modèle de boutons de fixation (2) est conçu de telle sorte que deux boutons de fixation (6) sont toujours disposés entre deux évidements de réception (6), y compris à la jonction entre deux plaques.

5. Elément de sol selon la revendication 3, caractérisé par le fait que dans une moitié environ de la plaque de mousse rectangulaire (1), plusieurs rangées de boutons de fixation (2) s'étendent sur toute la surface de la plaque en mousse le long de son côté longitudinal.

6. Elément de sol selon une ou plusieurs des revendications précédentes, caractérisé par le fait que les boutons de fixation (2) sont décalés d'une rangée à l'autre.

7. Elément de sol selon une ou plusieurs des revendications précédentes, caractérisé par le fait que des entretoises d'écartement (5) sont disposées entre les boutons de fixation (2) sur la plaque de mousse (1).

8. Elément de sol selon une ou plusieurs des revendications précédentes, caractérisé par le fait que les boutons de fixation (2) dont la forme fondamentale est cylindrique, présentent une surface latérale (4) légèrement concave.

9. Elément de sol selon une ou plusieurs des revendications précédentes, caractérisé par le fait que la surface de la plaque de mousse (1) supportant les boutons de fixation (2) a été recouverte d'un revêtement (7).
